# EUROPÄISCHE PATENTSCHRIFT

(11) **EP 1 338 970 B1**
(45) Veröffentlichungstag und Bekanntmachung des Hinweises auf die Patenterteilung: **29.08.2007**
(21) Anmeldenummer: 02102794.1
(22) Anmeldetag: 18.12.2002
(51) Int. Cl.: G06F 12/14, G06F 1/00, G11C 16/22

(54) **Verfahren und Anordnung zur Zugriffssteuerung auf EEPROMs sowie ein entsprechendes Computerprogrammprodukt und ein entsprechendes computerlesbares Speichermedium**
Method and system to control access to EEPROMs as well as corresponding computer program product and computer readable storage medium
Procédé et dispositif de commande d'accès aux EEPROMs ainsi que logiciel et mémoire correspondants

(30) Priorität: 19.12.2001 DE 10162308
(43) Veröffentlichungstag der Anmeldung: 27.08.2003
(73) Patentinhaber: NXP B.V., 5656 AG Eindhoven (NL)
(72) Erfinder: Müller, Detlef c/o Philips I.P. & Standards GmbH, 52088, Aachen (DE)
(74) Vertreter: Volmer, Georg

(56) Entgegenhaltungen:
- EP-A- 0 806 772
- EP-A- 1 030 314
- US-A- 5 345 413
- US-A- 5 363 334
- US-A- 5 469 557
- US-A- 6 034 889

## Beschreibung

Die Erfindung betrifft ein Verfahren und eine Anordnung zur Zugriffssteuerung auf EEPROMs. Speziell kann durch den Einsatz der Erfindung die unbefugte Benutzung von vollständig gelöschten EEPROMs auf Smartcard-Controllern unterbunden werden.

Die Entwicklung der Mikroelektronik in den 70er-Jahren ermöglichte es, kleine Computer im Kreditkartenformat ohne Benutzungsschnittstelle herzustellen. Solche Computer werden als Smartcards bezeichnet. In einer Smartcard sind Datenspeicher und arithmetisch-logische Einheit in einem einzigen Chip von wenigen Quadratmillimetern Größe integriert. Smartcards werden insbesondere als Telefonkarten, GSM-SIM-Karten, im Bankenbereich und im Gesundheitswesen eingesetzt. Die Smartcard ist damit zur allgegenwärtigen Rechenplattform geworden.

Smartcards werden derzeit vornehmlich als sicherer Aufbewahrungsort für geheime Daten und als sichere Ausführungsplattform für kryptographische Algorithmen betrachtet. Die Annahme einer relativ hohen Sicherheit der Daten und Algorithmen auf der Karte liegt im Hardwareaufbau der Karte und den nach außen geführten Schnittstellen begründet. Die Karte stellt sich nach außen als "Black Box" dar, deren Funktionalität nur über eine wohldefinierte Hardware- und Softwareschnittstelle in Anspruch genommen werden kann, und die bestimmte Sicherheitspolicies erzwingen kann. Zum einen kann der Zugriff auf Daten an bestimmte Bedingungen geknüpft werden. Kritische Daten, wie zum Beispiel geheime Schlüssel eines Public-Key-Verfahrens, können dem Zugriff von außen sogar völlig entzogen werden. Zum anderen ist eine Smartcard in der Lage, Algorithmen auszuführen, ohne dass die Ausführung der einzelnen Operationen von außen beobachtet werden kann. Die Algorithmen selbst können auf der Karte vor Veränderung und Auslesen geschützt werden. Im objektorientierten Sinn läßt sich die Smartcard als abstrakter Datentyp auffassen, der über eine wohldefinierte Schnittstelle verfügt, ein spezifiziertes Verhalten aufweist und selbst in der Lage ist, die Einhaltung bestimmter Integritätsbedingungen bezüglich seines Zustandes sicherzustellen.

Es gibt im Wesentlichen zwei verschiedene Typen von Smartcards. Speicherkarten besitzen lediglich eine serielle Schnittstelle, eine Adressierungs- und Sicherheitslogik und ROM- und EEPROM-Speicher. Diese Karten besitzen nur eingeschränkte Funktionalität und dienen einer spezifischen Anwendung. Dafür sind sie besonders billig herzustellen. Als Mikroprozessorkarten hergestellte Smartcards stellen im Prinzip einen vollständigen Universalrechner dar.

Der Herstellungs- und Auslieferungsprozess für Chipkarten gliedert sich in folgende Phasen:
- Herstellen des Halbleiters,
- Einbetten des Halbleiters,
- Bedrucken der Karte,
- Personalisierung der Karte,
- Ausgeben der Karte.

Im Allgemeinen wird jede Phase von einer auf die jeweilige Arbeit spezialisierten Firma durchgeführt. Beim Herstellen der Halbleiter ist insbesondere bei Karten mit festverdrahteter Sicherheitslogik auf eine gute betriebsinterne Sicherheit zu achten. Damit vom Hersteller ein korrekter Endtest durchgeführt werden kann, muß der komplette Speicher frei zugänglich sein. Erst nach dem Endtest wird der Chip durch einen Transportcode gesichert. Danach ist der Zugriff auf den Kartenspeicher nur für berechtigte Stellen, die den Transportcode kennen, möglich. Ein Diebstahl fabrikneuer Halbleiter bleibt damit ohne Folgen. Berechtigte Stellen können Personalisierer bzw. Kartenausgeber sein. Für das Einbetten und Bedrucken sind keine weiteren Sicherungsfunktionen notwendig. Die betreffenden Firmen brauchen den Transportcode nicht zu kennen.

Im Allgemeinen überträgt nicht der Kartenhersteller, sondern die ausgebende Stelle (zum Beispiel Bank, Telefongesellschaft, Krankenkasse etc.) die personenspezifischen Daten in die Karte. Diesen Vorgang nennt man Personalisierung. Für sie ist die Kenntnis des Transportcodes notwendig.

Das Ausgeben der Karte, also der Transport von der ausgebenden Stelle zum Karteninhaber, stellt ein weiteres Sicherheitsproblem dar. Genau genommen ist nur die persönliche Ausgabe an den Karteninhaber gegen Unterschrift und Vorlage des Personalausweises sicher. Ein Versand per Post ist zwar oft wirtschaftlicher aber auch ziemlich unsicher. Ein Problem ist auch das Übermitteln der PIN an den Karteninhaber, hier muß die gleiche Sorgfalt wie für die Karte gelten.

Bedingt durch die brisanten, sicherheitsrelevanten Inhalte der auf Smartcard-Controllern befindlichen Speicher, ist neben der Beachtung dieser Sicherungsmaßnahmen ein zusätzlicher Schutz gegen mögliche Aktivitäten von Hackern zu gewährleisten, die sich auf alle Phasen des Lebenslaufes einer Smartcard - beginnend von der Herstellung, über Transport, Nutzung der Karte bis zu Manipulationen unbrauchbar gewordener Karten - erstrecken.

Um eine möglichst hohe Sicherheit der Smartcard-Controller zu gewährleisten, werden zur Einstellung verschiedener Zustände (zum Beispiel Test/User mode, Konfigurationen, Trimmparameter für analoge Schaltungsteile etc.) EEPROM-Fuses verwendet. Eine Fuse besteht, je nach Anwendung, aus einem oder mehreren Bits. Die EEPROM-Fuses werden üblicherweise während der Reset-Phase mittels eines Boot-Mechanismus aus dem EEPROM gelesen und in Zustandsspeichern abgelegt, die im weiteren Verlauf des Betriebs sicherheitsrelevante Funktionen erlauben oder verbieten.

In herkömmlichen Smartcard-Controllern findet ein Beschreiben des EEPROM unter Software-Kontrolle statt. Insbesondere Personalisierungsroutinen, sowohl im User-Programm als auch gegebenenfalls im Testprogramm, müssen softwaremäßige Absicherungen gegen unbefugtes Beschreiben, insbesondere eines gelöschten EEPROMs, enthalten, um zu verhindern, dass eine Smartcard mit gelöschtem EEPROM von einem Angreifer als "blank card" mißbraucht werden kann. Insbesondere muß das von einigen Anwendern geforderte vollständige Löschen des EEPROMs im Falle einer erkannten Attacke gegen die Smartcard softwaremäßig gut abgesichert sein.

Verfahren zur Absicherung von EEPROMs gegen unberechtigte Zugriffe werden beispielsweise in den US-Patentschriften US 5,469,557, US 5,363,334 oder US 6,034,889 beschrieben. Bei dem in US 5,469,557 beschriebenen Verfahren wird der Speicherbereich durch eine EEPROM-Fuse gesichert. Bei einem Reset der EEPROM-Fuse wird der Speicher gelöscht. Die beiden anderen genannten Patentschriften (US 5,363,334 oder US 6,034,889) stellen Lösungen vor, bei denen die Adressen schreibgeschützter Speicherbereiche in einem Register abgelegt und bei einem Schreibzugriff mit den Zieladressen verglichen werden.

Die EP 0 806 772 A2 offenbart dabei, dass der Zugriff auf den EEPROM oder auf Teile des EEPROMs durch Fuses gesteuert wird. Dies impliziert, dass die Manipulation mindestens einer dieser Fuses den Schreibzugriff auf das EEPROM sperrt.

Die US-Patentschrift US 5,345,413 beschreibt die Verwendung einer Sperr-Fuse (lockout fuse) in EEPROMs, welche nach einem Abschlusstest aktiviert wird und sicherstellt, dass der EEPROM nur einmal konfiguriert werden kann.

In der europäischen Patentanmeldung EP 1 030 314 A1 wird eine Vorrichtung und ein Verfahren beschrieben zum Testen von reprogrammierbaren, nicht-flüchtigen Speichern, wobei die Speicher Bereiche umfassen, die gegen unberechtigten Zugriff geschützt sind. Weiter weist der Speicher ein temporäres Register auf, welche eine Emulation der Zugriffsrechte gewährleisten.

In der internationalen Anmeldung WO 93/10498 wird ein Mikrocontroller beschrieben, welcher einen EPROM-Programm-Speicher enthält und in verschiedenen Modi, insbesondere einem Sicherheits-Modus, arbeiten kann. Weiterhin weist der Mikrocontroller EPROM-Konfigurations-Fuses auf, die den Programm-Speicher des Mikrocontrollers konfigurieren und Lese-, Verifizierung- und/oder Schreibzugriffe aus Bereichen des Chips, die nicht besonders gesichert sind, kontrollieren und gegebenenfalls zurückweisen. Dabei repräsentiert der Bit-Wert der erwähnten Fuses deren Konditionen. Diese Konditionen bzw. Werte werden berücksichtigt, indem der Wert des Bit der jeweiligen, im EPROM-Programm-Speicher gespeicherten Fuse gelesen wird. Die Sicherheit des Chips wird eingestellt, indem der Mikrocontroller im geschützten Mode konfiguriert wird, was durch Set-zen der entsprechenden Bits der Fuses geschieht, welche die gewünschte Konfiguration repräsentieren.

Aus der EP 0 806 772 A2 ist außerdem ein Verfahren und eine Vorrichtung bekannt, welche Schutz vor Löschen oder Beschreibung von EEPROMs bereitstellen, indem in einem Kontrollregister vor jedem Schreib- oder Löschversuch die Berechtigung für einen derartigen Zugriff geprüft und der Zigriff ggf. verhindert wird.

Diese Verfahren lehren jedoch nicht die Art der Manipulation, die notwendig sind, um den Schreibzugriff auf das EEPROM zu sperren.

Der Erfindung liegt deshalb die Aufgabe zugrunde, ein Verfahren und eine Anordnung der gattungsgemäßen Art anzugeben, mittels welchen die Nachteile der herkömmlichen Verfahren vermieden werden.

Erfindungsgemäß wird diese Aufgabe gelöst durch die Merkmale im kennzeichnenden Teil des Anspruchs 1, im Zusammenwirken mit den Merkmalen im Oberbegriff. Zweckmäßige Ausgestaltungen der Erfindung sind in den Unteransprüchen enthalten.

Ein besonderer Vorteil des Verfahrens zur Zugriffssteuerung auf EEPROMs besteht darin, dass der Zugriff auf den EEPROM oder auf Teile des EEPROMs durch Fuses gesteuert wird, und eine Manipulation mindestens einer dieser Fuses den Schreibzugriff auf das EEPROM sperrt, wobei die Manipulationen, welche das Sperren des Schreibzugriffs veranlassen, im Löschen der EEPROM-Matrix oder in Manipulationen des Bootvorgangs bestehen. In der Erfindung ist es also vorgesehen, eine oder mehrere solcher EEPROM-Fuses, bestehend aus mehreren Bits, dazu zu verwenden, die konkrete sicherheitsrelevante Funktion des Beschreibens des EEPROMs nur dann zuzulassen, wenn diese Fuse einen bestimmten Wert, d. h. eine bestimmte Bit-Kombination, enthält. Eine Manipulation dieser Fuse durch Löschen der gesamten Matrix oder durch Manipulation des Boot-Vorgangs sperrt dann alle weiteren Schreibzugriffe auf das EEPROM.

Eine Anordnung zur Zugriffssteuerung auf EEPROMs ist vorteilhafterweise so eingerichtet, dass sie einen Prozessor umfasst, der derart eingerichtet ist, dass eine Zugriffssteuerung auf EEPROMs durchführbar ist, indem der Zugriff auf den EEPROM oder auf Teile des EEPROMs durch Fuses gesteuert wird und eine Manipulation mindestens einer dieser Fuses den Schreibzugriff auf das EEPROM sperrt.

Ein weiterer Vorteil des erfindungsgemäßen Verfahrens besteht darin, dass der Zugriff auf den EEPROM eines Mikrocontrollers, insbesondere eines Smartcard-Controllers, oder auf Teile eines solchen EEPROMs gesteuert wird. Als vorteilhaft erweist es sich, dass ein Schreib-Zugriff auf den EEPROM nur bei wohldefinierten Werten von mindestens einer Fuse durchführbar ist.

In bevorzugter Ausgestaltung des erfindungsgemäßen Verfahrens ist vorgesehen, dass nach dem Löschen der EEPROM-Matrix das EEPROM für Schreibzugriffe gesperrt ist.

Bei einer Zugriffssteuerung auf EEPROMs erweist es sich als vorteilhaft, dass die den Zugriff steuernde(n) Fuse(s) mittels Boot-Sequenz während der Reset-Phase aus dem EEPROM gelesen wird (werden).

Ebenso erweist es sich als vorteilhaft, dass die den Zugriff steuernden Fuse(s) in mindestens einem Zustandsspeicher abgelegt wird (werden). Ein weiterer Vorteil des erfindungsgemäßen Verfahrens besteht darin, dass im Testmode des Mikrocontrollers die Security-Row des EEPROMs beschreibbar ist. Darüber hinaus ist in bevorzugter Ausgestaltung des erfindungsgemäßen Verfahrens vorgesehen, dass im Testmode des Mikrocontrollers der von der Security-Row verschiedene Teil der Speichermatrix durch mindestens eine Fuse vor einem Schreib-Zugriff schützbar ist.

Als vorteilhaft erweist es sich auch, dass beim Testen des Mikrocontrollers Block-Modes hantiert werden.

Darüber hinaus ist in bevorzugter Ausgestaltung der erfindungsgemäßen Anordnung vorgesehen, dass der Prozessor Teil eines Smartcard-Controllers und die Anordnung eine Smartcard ist.

Der besondere Vorteil des Erfindung besteht weiterhin insbesondere darin, dass durch die Schreibsperre des EEPROM hardwaremäßig gegen Manipulation geschützt wird, insbesondere gegen alle bekannten und unbekannten Attacken, die die komplette EEPROM-Matrix manipulieren.

Die Erfindung wird nachfolgend in einem Ausführungsbeispiel näher erläutert.

Wie erwähnt, werden die EEPROM-Fuses zum Beispiel während der Reset-Phase mittels eines Boot-Mechanismus aus dem EEPROM gelesen und in Zustandsspeichern abgelegt, die im weiteren Verlauf des Betriebs sicherheitsrelevante Funktionen erlauben oder verbieten. In der Erfindung ist es vorgesehen, eine oder mehrere solcher EEPROM-Fuses, bestehend aus mehreren Bits, dazu zu verwenden, die konkrete sicherheitsrelevante Funktion des Beschreibens des EEPROMs nur dann zuzulassen, wenn diese Fuse einen bestimmten Wert, das heißt eine bestimmte Bit-Kombination, enthält. Eine Manipulation dieser Fuse, zum Beispiel durch Löschen der gesamten Matrix oder aber auch durch Manipulationen des Boot-Vorgangs, sperrt dann alle weiteren Schreibzugriffe auf das EEPROM. Ebenso wird eine Chip-Karte, bei der der Anwender im Falle eines erkannten Angriffs das komplette EEPROM löscht, damit automatisch gegen alle weiteren Schreibvorgänge gesperrt. So lassen sich insbesondere keinerlei Daten (zum Beispiel Schlüssel) oder Programme mehr in das EEPROM laden. Damit ist eine auf diese Weise per Hardware geschützte Chipkarte für einen potentiellen Angreifer wertlos.

Die schaltungstechnische Implementation muß in der Weise vorgesehen werden, dass sich im Testmode die Security-Row des EEPROM, in der sich die EEPROM-Fuses befinden, auf jeden Fall beschreiben läßt, während der Rest der Matrix durch die Schreibschutz-Fuses geschützt ist. Das Beschreiben der Matrix muß durch ein entsprechendes Setzen der Schreibschutz-Fuses aktiviert werden. Auf diese Weise lassen sich zum Beispiel beim Testen auch Blockmodes hantieren.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur Zugriffssteuerung auf EEPROMs, bei dem der Zugriff auf den EEPROM oder auf Teile des EEPROMs durch Fuses gesteuert wird, wobei eine Manipulation mindestens einer dieser Fuses den Schreibzugriff auf das EEPROM sperrt,
**dadurch gekennzeichnet, dass**
die Manipulation von EEPROM-Fuses das Löschen der EEPROM-Matrix oder Manipulation des Bootvorgangs umfassen, wobei die Fuse(s) aus einer Kombination von mehreren Bits besteht (bestehen).

2. Verfahren nach Anspruch 1,
**dadurch gekennzeichnet, dass**
der Zugriff auf den EEPROM eines Mikrocontrollers, insbesondere eines Smartcard-Controllers, oder auf Teile eines solchen EEPROMs gesteuert wird.

3. Verfahren nach einem der vorhergehenden Ansprüche,
**dadurch gekennzeichnet, dass**
ein Schreib-Zugriff auf den EEPROM nur bei wohldefinierten Werten von mindestens einer Fuse durchführbar ist.

4. Verfahren nach einem der vorhergehenden Ansprüche,
**dadurch gekennzeichnet, dass**
die den Zugriff steuernden Fuse(s) mittels Boot-Sequenz während der Reset-Phase aus dem EEPROM gelesen wird (werden).

5. Verfahren nach einem der vorhergehenden Ansprüche,
**dadurch gekennzeichnet, dass**
die den Zugriff steuernden Fuse(s) in mindestens einem Zustandsspeicher abgelegt wird (werden).

6. Verfahren nach einem der vorhergehenden Ansprüche,
**dadurch gekennzeichnet, dass**
im Testmode des Mikrocontrollers die für Konfigurationsdaten vorgesehenen Speicherbereiche des EEPROMs beschreibbar ist.

7. Verfahren nach einem der vorhergehenden Ansprüche,
**dadurch gekennzeichnet, dass**
im Testmode des Mikrocontrollers andere als die für Konfigurationsdaten vorgesehenen Teile der Speichermatrix durch mindestens eine Fuse vor einem Schreib-Zugriff schützbar sind.

8. Verfahren nach einem der vorhergehenden Ansprüche,
**dadurch gekennzeichnet, dass**
beim Testen des Mikrocontrollers Block-Modes durchführbar sind.

9. Anordnung mit einem Prozessor, der derart eingerichtet ist, dass eine Zugriffssteuerung auf EEPROMs durchführbar ist, indem der Zugriff auf den EEPROM oder auf Teile des EEPROMs durch Fuses gesteuert wird und eine Manipulation mindestens einer dieser Fuses den Schreibzugriff auf das EEPROM sperrt.

10. Anordnung mit einem Prozessor nach Anspruch 9,
**dadurch gekennzeichnet, dass**
der Prozessor Teil eines Smartcard-Controllers und die Anordnung eine Smartcard ist.

## Claims

1. A method of controlling access to EEPROMs, in which the access to the EEPROM or to parts of the EEPROM is controlled by fuses, where a manipulation of at least one of these fuses locks out the write access to the EEPROM, **characterized in that** the manipulation of EEPROM fuses comprises the erasing of the EEPROM matrix or manipulation of the boot mechanism, the fuse(s) comprising a combination of a plurality of bits.

2. A method as claimed in claim 1, **characterized in that** access to the EEPROM of a microcontroller, and particularly of a smart-card controller, or to parts of such an EEPROM, is controlled.

3. A method as claimed in any one of the preceding claims, **characterized in that** write access to the EEPROM is possible only when at least one fuse is of well-defined values.

4. A method as claimed in any one of the preceding claims, **characterized in that** the fuse(s) controlling the access is (are) read from the EEPROM during the reset phase by means of the boot sequence.

5. A method as claimed in any one of the preceding claims, **characterized in that** the fuse(s) controlling the access is (are) stored in at least one state memory.

6. A method as claimed in any one of the preceding claims, **characterized in that** in the test mode of the microcontroller the EEPROM memory areas provided for configuration data can be written to.

7. A method as claimed in any one of the preceding claims, **characterized in that** the parts of the memory matrix that are not parts provided for the configuration data are protectable against write access by at least one fuse in the test mode of the microcontroller.

8. A method as claimed in any one of the preceding claims, **characterized in that** block modes can be made use of when the microcontroller is being tested.

9. A system including a processor that is so arranged that control of the access to EEPROMs can be performed by controlling access to the EEPROM or to parts of the EEPROM by fuses and manipulation of at least one of these fuses locks out the write access to the EEPROM.

10. A system including a processor as claimed in claim 9, **characterized in that** the processor forms part of a smart card controller and the system is a smart card.

## Revendications

1. Procédé de commande d'accès aux EEPROMs, dans lequel l'accès à l'EEPROM ou à des parties de l'EEPROM est commandé par des fusibles, une manipulation au moins d'un de ces fusibles bloquant l'accès en écriture à l'EEPROM, **caractérisé en ce que** la manipulation des fusibles EEPROM comprend l'effacement de la matrice EEPROM ou la manipulation du processus de démarrage, le(s) fusible(s) se composant d'une combinaison de plusieurs bits.

2. Procédé selon la revendication 1, **caractérisé en ce que** on commande l'accès à l'EEPROM d'un microcontrôleur, en particulier d'un contrôleur de carte à puce, ou l'accès à des parties d'une telle EEPROM.

3. Procédé selon l'une quelconque des revendications précédentes, **caractérisé en ce qu'**un accès en écriture à l'EEPROM n'est exécutable qu'avec des valeurs bien définies d'au moins un fusible.

4. Procédé selon l'une quelconque des revendications précédentes, **caractérisé en ce que** le(s) fusible(s) commandant l'accès est/sont lu(s) dans l'EEPROM au moyen d'une séquence de démarrage pendant la phase de réinitialisation.

5. Procédé selon l'une quelconque des revendications précédentes, **caractérisé en ce que** le(s) fusible(s) commandant l'accès est/sont stocké(s) dans au moins une mémoire d'état.

6. Procédé selon l'une quelconque des revendications précédentes, **caractérisé en ce qu'**en mode test du microcontrôleur les espaces de mémoire de l'EEPROM prévus pour les données de configuration sont inscriptibles.

7. Procédé selon l'une quelconque des revendications précédentes, **caractérisé en ce qu'**en mode test du microcontrôleur d'autres parties de la matrice de mémoire que celles prévues pour les données de configuration peuvent être protégées par au moins un fusible contre un accès en écriture.

8. Procédé selon l'une quelconque des revendications précédentes, **caractérisé en ce que** des modes blocs sont exécutables lors du test du microcontrôleur.

9. Dispositif doté d'un processeur qui est conçu de telle façon qu'une commande d'accès aux EEPROMs est exécutable du fait que l'accès à l'EEPROM ou à des parties de l'EEPROM est commandé par l'intermédiaire de fusibles et qu'une manipulation d'au moins un de ces fusibles bloquer l'accès en écriture à l'EEPROM.

10. Dispositif muni d'un processeur selon la revendication 9, **caractérisé en ce que** le processeur fait partie d'un contrôleur de carte à puce et le dispositif est une carte à puce.
